# EUROPEAN PATENT APPLICATION

(11) **EP 1 267 505 A1**
(43) Date of publication of application: **18.12.2002**
(21) Application number: 01908328.6
(22) Date of filing: 05.03.2001
(51) Int. Cl.: H04H 1/00, H04N 7/173, H04N 17/00, G06F 17/60

(54) **TRANSMISSION DEVICE, RECEPTION DEVICE, SERVICE DETERMINING DEVICE, SERVICE PROVIDING SYSTEM, AND SERVICE PROVIDING METHOD**

(30) Priority: 03.03.2000 JP 2000059417
(71) Applicant: MATSUSHITA ELECTRIC INDUSTRIAL CO., LTD., Kadoma-shi, Osaka 571-8501 (JP); Dentsu Inc., Chuo-ku, Tokyo 104-8426 (JP)
(72) Inventor: NISHI, Hiroyuki, Suginami-ku, Tokyo 168-0065 (JP); TANIGAWA, Hidekazu, Hirakata-shi, Osaka 573-1105 (JP); AKIYAMA, Ryuhei, Nishinomiya-shi, Hyogo 662-0066 (JP); MAEDA, Hiroki, Toyonaka-shi, Osaka 560-0043 (JP)
(74) Representative: Balsters, Robert
(86) International application number: JP0101706
(87) International publication number: WO01065745

(57) **Abstract**

A transmitting device for transmitting a broadcast to a receiving device transmits service reception control information, the service reception control information including: service management information including a service content to be provided to a viewer, which is determined based on viewer information including at least personal information regarding attributes of the viewer input by the viewer to the receiving device; and information for specifying the receiving device to receive the service management information.

## Description

### TECHNICAL FIELD

The present invention relates to a service providing system and a service providing method for providing a variety of services by broadcasting, and a transmitting device, a receiving device and a service determination device preferably used in the service providing system or when implementing the service providing method.

### BACKGROUND ART

Conventionally, in broadcast by ground waves, broadcast by satellite, or the like, information such as a program transmitted from a broadcasting station is merely received at a receiving device of a viewer, and a viewer merely watches information such as a transmitted program. In recent years, information can be transmitted from a receiving device of a viewer by using a telephone line. Such a receiving device can transmit information such as a desire to purchase an item based on item information from a broadcasting station, answers to a questionnaire, or the like.

With such a receiving device, a viewer can provide a variety of information to a broadcasting station, a sponsor of a program, or the like. However, there is a problem that a viewer cannot directly receive a service which matches the information provided by the viewer. That is, even when viewers provide information, such as answers to a questionnaire, not all of the viewers receive the appropriate services. This may be the reason why a variety of information, such as answers to a questionnaire, cannot be obtained from many viewers.

An objective of the present invention is to provide a service providing system and a service providing method which is capable of providing an appropriate service to each viewer and easily collecting viewer information, such as personal information, of each viewer.

Another objective of the present invention is to provide a transmitting device, a receiving device, and a service determination device which can be preferably used in the service providing system and the service providing method.

### DISCLOSURE OF THE INVENTION

A transmitting device for transmitting a broadcast to a receiving device according to the present invention transmits service reception control information, the service reception control information including: service management information including a service content to be provided to a viewer, which is determined based on viewer information including at least personal information regarding attributes of the viewer input by the viewer to the receiving device; and information for specifying the receiving device to receive the service management information, whereby the above objectives are achieved.

A receiving device for receiving a broadcast transmitted from the transmitting device according to the present invention receives, when service reception control information is transmitted from the transmitting device, the service reception control information, the service reception control information including: service management information including at least a service content to be provided to a viewer, which is determined based on viewer information including at least personal information regarding attributes of the viewer input by the viewer to the receiving device; and information for specifying the receiving device to receive the service management information, whereby the above objectives are achieved.

An input section for inputting the viewer information may be further provided.

The viewer information may be transmitted to a network upon input of the viewer information.

A registration section for registering the viewer information which is input using the input section may be further provided.

The number of times of registration of the viewer information may be calculated and registered at a registration section and the number of times of the registration may be used in determining the service management information.

The service management information may include a service amount, and the number of times of input registered at the registration section may be used in determining the service amount.

A service determination device according to the present invention determines service management information including at least a service content to be provided to a viewer, based on viewer information including at least personal information regarding attributes of the viewer obtained from the viewer of a receiving device to receive a broadcast transmitted from a transmitting device, whereby the above objectives are achieved.

The service management information may include a service amount.

The service amount may be an amount of discount to a various fee.

The service amount may be a period for which a service is available.

The viewer information may include questionnaire information which is answers to questions in the questionnaire.

A service providing system according to the present invention includes a service determination device for determining service management information including at least a service content to be provided to a viewer, based on viewer information including at least personal information regarding attributes of the viewer and input by the viewer to a receiving device, a transmitting device for transmitting service reception control information including service management information determined by the service determination device and information for specifying a receiving device to receive the service management information, and areceiving device for receiving the service reception control information, whereby above objectives are achieved.

A method for providing a service to a viewer by using a broadcasting system which is configured to receive a broadcast transmitted from a transmitting device using a receiving device according to the present invention includes: determining service management information including at least a service content to be provided to a viewer, based on viewer information including at least personal information regarding attributes of the viewer obtained from the viewer of the receiving device; transmitting service reception control information, from the transmitting device, the service reception control information including the determined service management information and information for specifying the receiving device to receive the service management information; and receiving the service reception control information transmitted from the transmitting device, whereby the above objectives are achieved.

### BRIEF DESCRIPTION OF THE DRAWINGS

Figure **1** is a schematic diagram showing an exemplary service providing system according to an embodiment of the present invention.
Figure **2** is a diagram of exemplary information for registration to be transmitted from a transmitting device in the service providing system according to an embodiment of the present invention.
Figure **3** is a diagram of a viewer information panel in a receiving device which has received the information for registration according to an embodiment of the present invention.
Figure **4** is a table illustrating a method for determining a service content in a service determination device used in the service providing system according to an embodiment of the present invention.
Figure **5** is a table illustrating a method for determining a service amount in the service determination device according to an embodiment of the present invention.
Figure **6** is a table illustrating a method for determining a service amount in the service determination device according to an embodiment of the present invention.
Figure **7** is a flowchart illustrating a method for determining a service amount in the service determination device according to an embodiment of the present invention.
Figure **8** is a flowchart illustrating a method for determining a service content in the service determination device according to an embodiment of the present invention.
Figure **9** is a table showing an exemplary content of service management information determined at the service determination device according to an embodiment of the present invention.

### BEST MODE FOR CARRYING OUT THE INVENTION

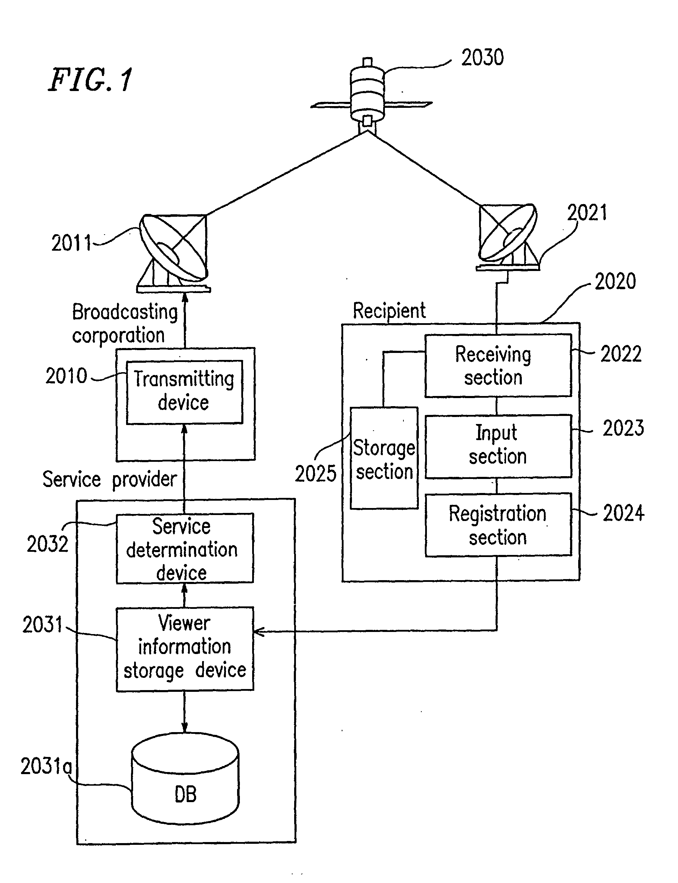

Hereinafter, embodiments of the present invention will be described with reference to the drawings. Figure **1** is a block diagram showing an embodiment of a service providing system according to the present invention. This service providing system is implemented with a transmitting device **2010** which is used by a broadcast corporation to transmit a digital broadcast, and a receiving device **2020** of a viewer for receiving the digital broadcast, which is transmitted to a satellite **2030** and a parabolic antenna **2021** of the receiving device **2020** by a parabolic antenna **2011** of the transmitting device **2010**.

The receiving device **2020** has a receiving section **2022** for receiving a digital broadcast. The digital broadcast transmitted from the transmitting device **2010** is received at the receiving section **2022**. The receiving device **2020** is also provided with a storage section **2025** for storing information received at the receiving section **2022**. Further, the receiving device **2020** is provided with an input section **2023** for inputting viewer information which can be obtained from a viewer, including personal information on attributes of a viewer, such as name, age, and the like, questionnaire information which is answers to a questionnaire sent from the transmitting device **2010**, and the like. The viewer information input using the input section **2023** is first registered at a registration section **2024** provided in the receiving device **2020**.

In the service providing system according to the present invention, for example, the broadcast corporation uses the transmitting device **2010** to transmit information for registration which is a questionnaire for the viewer to input the viewer information by a digital broadcast or the like to each receiving device **2020** of the viewer. The information for registration transmitted by the transmitting device **2010** is received at the receiving section **2022** of the receiving device **2020**.

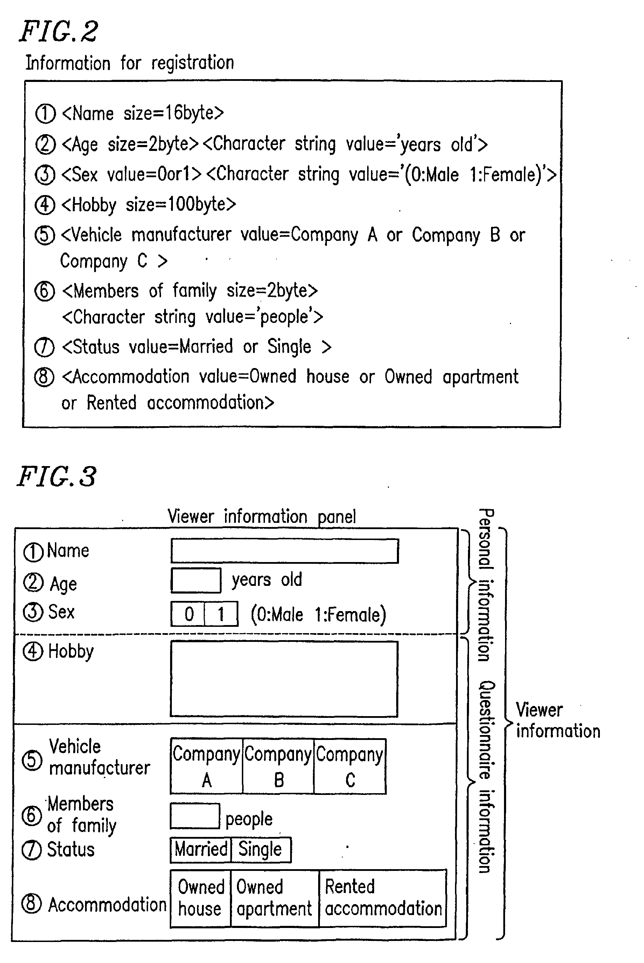

As shown in Figure **2**, for example, as the information for registration to be transmitted, questions regarding the personal information on attributes of the viewer such as name, age, sex and the like, and a questionnaire regarding a hobby, family, a vehicle, accommodation and the like are coded and transmitted. The transmitted information for registration is received at the receiving device **2020**. When answering the information for registration, the viewer of the receiving device **2020** displays a viewer information panel as the information for registration shown in Figure **3** on a display screen of the receiving device **2020**. The viewer operates the input section **2023** provided in the receiving device **2022** to input the answers to questions in the information for registration, i.e., the personal information on attributes of the viewer and the questionnaire information which is answers to the questionnaire.

The input section **2023** may be a group of operation buttons (a keyboard), a soft keyboard (a touch panel), a remote control and a remote control signal receiving section (an infrared light receiving section), or the like.

By performing a process similar to HTML parsing of an internet browser and lexical analysis of information for registration, the information for registration can be displayed as a viewer information panel as shown in Figure **3.**

The viewer information input by operating the input section **2023** is registered at the registration section **2024**. In the registration section **2024,** a number of times the viewer information is registered is calculated and registered. The information for registration is transmitted from the transmitting device **2010** at any time or based on a schedule which has been transmitted from the transmitting device **2010** with the content of the questionnaire modified. If the information for registration is transmitted based on the schedule which has been transmitted from the transmitting device **2010**, the receiving device **2020** is turned on at the time the information for registration is transmitted.

Referring again to Figure **1**, the viewer information registered at the registration section **2024** is transmitted to a viewer information storage device **2031** of a service provider which provides services as a business using a network, such as the internet, for example, and stored in a viewer information database (DB) **2031a**. In this case, the number of times of registration into the registration section **2024**, i.e., the number of times answers are given to the transmitted information for the registration, is also transmitted to the viewer information storage device **2031** and stored in the viewer information DB **2031a.**

The service provider has a service determination device **2032** for determining contents of services to provide based on the viewer information stored in the viewer information DB **2031a**. The service determination device **2032** determines a specific content of a service to be provided to the viewer, as well as an amount of the service for the contents, as service management information, based on the viewer information, the number of times of registration, and the like stored in the viewer information DB **2031a**.

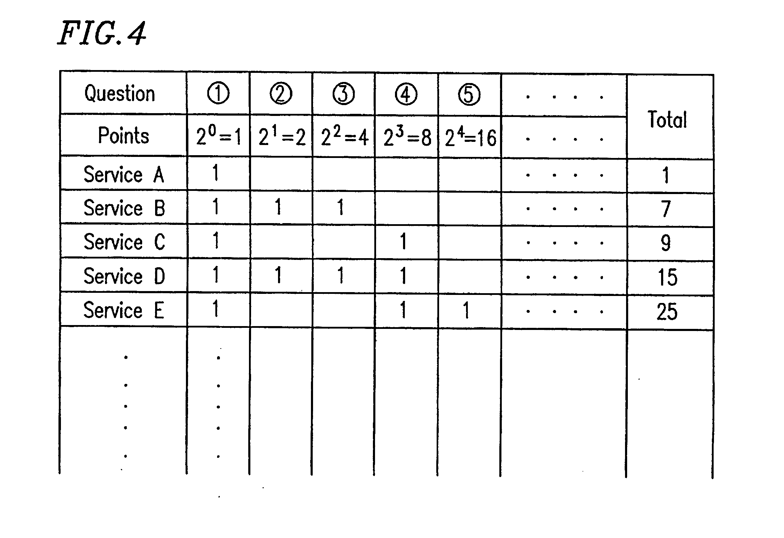

For example, in the case where the information for registration shown in Figure **3** is transmitted, as shown in Figure **4**, the content of a service to be provided to the viewer with regard to the answers of questions 1 through 8 are predetermined. As the viewer information, for example, it is determined to respectively provide service A when only question 1 is answered and the number of points is 1, service B when questions 1 thorough 3 are answered and the number of points is 7, service C when questions 1 and 4 are answered and the number of points is 9, service D when questions 1 through 4 are answered and the number of points is 15, the service E when questions 1, 4 and 5 are answered and the number of points is 25, and so on.

The content of the service may be, for example, provision of item information, provision of information on events such as concerts, discount on concert tickets or the like, discount on pay digital broadcast fees, and the like.

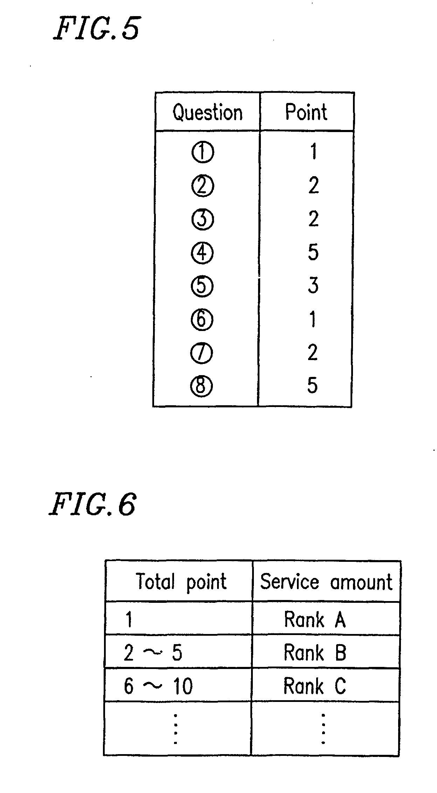

For each of the questions in the information for registration shown in Figure **3**, points for determining the service amount are predetermined. For example, as shown in Figure **5**, 1 point is given for the answer to question 1; 2 points are given for the answer to question 2, and so on. The points given for answers to the questions are added together. Also, points are predetermined for the number of times of registration, i.e., the number of answers to the transmitted information for registration. These points are also added. Then, as shown in Figure **6**, a service amount is determined to be rank A, rank B, and so on, based on the total number of points. The service amount includes discount rates of various fees, a period for which the discount is effective, and the like. As the total point increases, the service amount increases, for example, the discount rate becomes larger, and the effective period becomes longer.

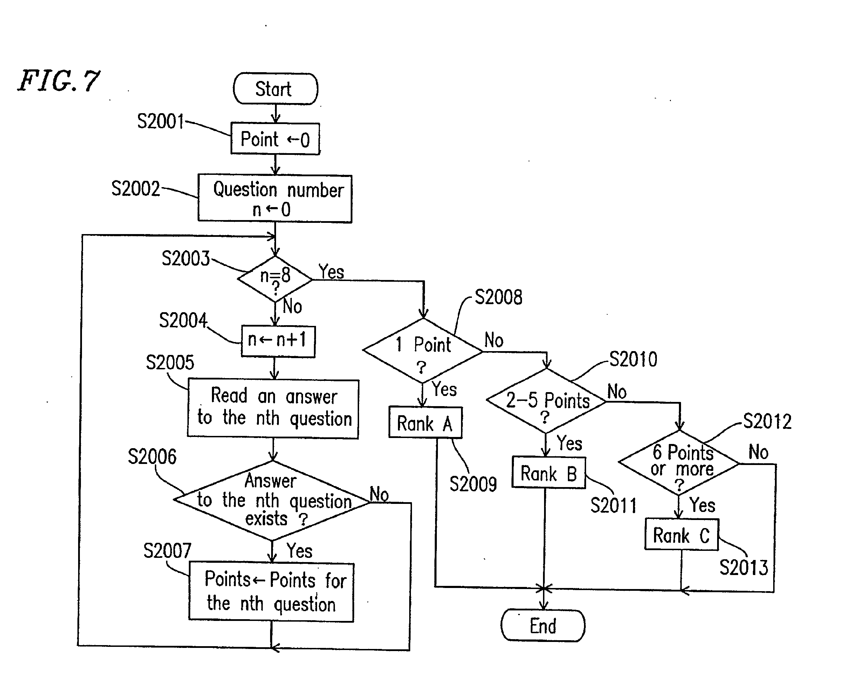

The service determination device **2032** determines the service amount as shown in the flowchart of Figure **7**. In this embodiment, first, the number of points to be set based on the answers to the information for registration is assumed to be 0 (see step S2001 in Figure **7**). Next, the value of the question number of the information for registration is cleared (step S2002). Then, whether the answers to all of the questions (in the present embodiment, 8 questions) have been checked or not is confirmed (step S2003). The question number is incremented by one (step S2004). The answer to question 1 is read (step S2005). Then, whether the answer to the question 1 has been given or not is checked (step S2006). If the answer has been given, the predetermined number of points for the question 1 (in this case, 1 point) is added (step S2007).

Subsequently, the existence of the answers for all of the questions is confirmed with similar procedures. The total number of points is calculated based on the existence of the answers to all of the questions. As shown in the table of Figure **6**, the service amount is determined based on the total number of points. If the total number of points is 1 (step S2008), the service is a rank A service (step S2009). If the total number of points is 2 to 5 (step S2010), the service is a rank B service (step S2011). Subsequently, the service amount is determined with similar steps (steps S2012 and S2013).

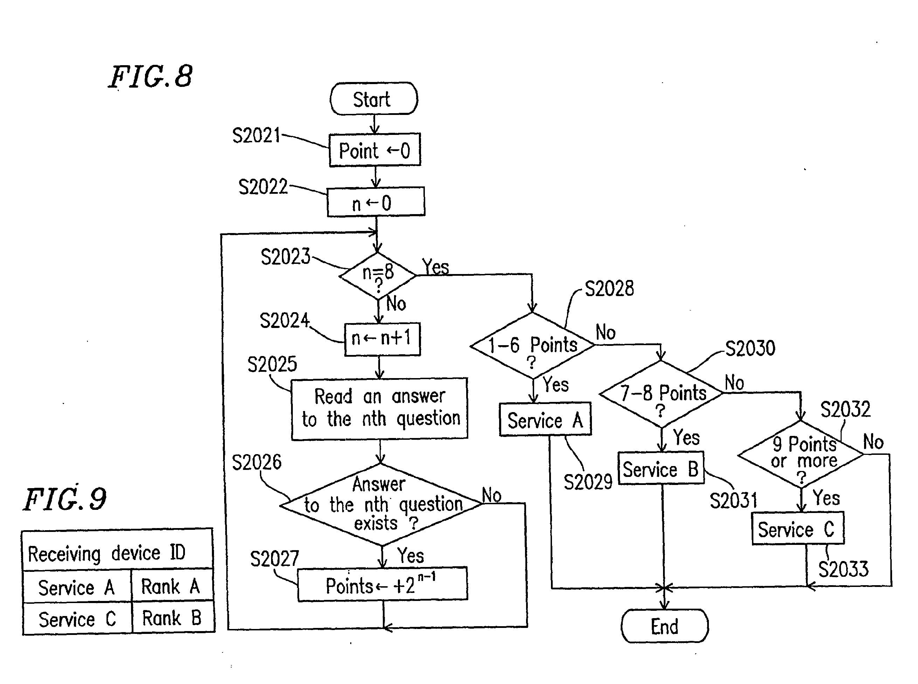

For determining the content of the service, as shown in Figure **8**, first, the number of points to be set based on the answers to the information for registration is assumed to be 0 (see step S2012 in Figure **8**). Next, the value of the question number of the information for registration is cleared to 0 (step S2022). Then, whether the answers to all of the questions (in the present embodiment, 8 questions) have been checked or not is confirmed (step S2023). The question number is incremented by one (step S2024). The answer to question 1 is read (step S2025). Then, whether the answer to the question 1 has been given or not is checked (step S2026). If the answer has been given, the predetermined number of points for question 1 (in this case, assume that the question number is n, 2ⁿ⁻¹ points) is added (step S2027).

Subsequently, the existence of the answers for all of the questions is confirmed with similar procedures. The total number of points is calculated based on the existence of the answers to all of the questions. As shown in the table of Figure **4**, the service content is determined based on the total number of points. If the total number of points is 1 to 6 (step S2028), the service is a rank A service (step S2029). If the total number of points is 7 to 8 (step S2030), the service is a rank B service (step S2031). Subsequently, the service amount is determined with similar steps (steps S2032 and S2033).

After the service determination device **2032** determines service management information including the service content and the service amount, as shown in Figure **9**, the service determination device **2032** transmits the service management information and ID information for specifying a receiving device **2020** of the viewer who will receive the service management information, to the transmitting device **2010** of the broadcasting corporation by using a network such as the internet.

Service reception control information transmitted to the transmitting device **2010** of the broadcasting corporation is transmitted from the transmitting device **2010** via digital communication. When the receiving section **2022** of the receiving device **2020** receives the service reception control information transmitted from the transmitting device **2010**, the receiving section **2022** stores the information in the storage section **2025** provided in the receiving device **2020** if the information matches the ID information included in the service reception control information. Thus, the viewer of the receiving device **2020** which has received a service reception control signal can receive a service having the service contents and the service amount included in the service manage information stored in the storage section **2025**.

### INDUSTRIAL APPLICABILITY

A service providing system and a service providing method according to the present invention provide an appropriate service to each viewer by using a broadcast, based on viewer information of each viewer. Furthermore, the viewers are more liable to provide the viewer information in expectation of receiving appropriate services. Therefore, the viewer information can be easily collected. A transmitting device, a receiving device, and a service determination device according to the present invention can be preferably used in such a service providing system.

## Claims

1. A transmitting device for transmitting a broadcast to a receiving device, wherein service reception control information is transmitted, the service reception control information including: service management information including a service content to be provided to a viewer, which is determined based on viewer information including at least personal information regarding attributes of the viewer input by the viewer to the receiving device; and information for specifying the receiving device to receive the service management information.

2. A receiving device for receiving a broadcast transmitted from the transmitting device, wherein, when service reception control information is transmitted from the transmitting device, the service reception control information is received, the service reception control information including: service management information including at least a service content to be provided to a viewer, which is determined based on viewer information including at least personal information regarding attributes of the viewer input by the viewer to the receiving device; and information for specifying the receiving device to receive the service management information.

3. A receiving device according to claim 2, further comprising an input section for inputting the viewer information.

4. A receiving device according to claim 3, which can transmit the viewer information to a network upon input of the viewer information.

5. A receiving device according to claim 3, further comprising a registration section for registering the viewer information which is input using the input section.

6. Areceiving device according to claim 5, wherein the number of times of registration of the viewer information is calculated and registered at a registration section and the number of times of the registration is used in determining the service management information.

7. A receiving device according to claim 6, wherein the service management information includes a service amount, and the number of times of input registered at the registration section is used in determining the service amount.

8. A service determination device for determining service management information including at least a service content to be provided to a viewer, based on viewer information including at least personal information regarding attributes of the viewer obtained from the viewer of a receiving device to receive a broadcast transmitted from a transmitting device.

9. A service determination device according to claim 8, wherein the service management information includes a service amount.

10. A service providing system according to claim 9, wherein the service amount is an amount of discount to a various fee.

11. A service providing system according to claim 9, wherein the service amount is aperiod for which a service is available.

12. A service providing system according to claim 8, wherein the viewer information includes questionnaire information which is answers to questions in the questionnaire.

13. A service providing system comprising:
a service determination device for determining service management information including at least a service content to be provided to a viewer, based on viewer information including at least personal information regarding attributes of the viewer and input by the viewer to a receiving device;
a transmitting device for transmitting service reception control information including service management information determined by the service determination device and information for specifying a receiving device to receive the service management information; and
a receiving device for receiving the service reception control information.

14. A method for providing a service to a viewer by using a broadcasting system which is configured to receive a broadcast transmitted from a transmitting device using a receiving device, comprising:
determining service management information including at least a service content to be provided to a viewer, based on viewer information including at least personal information regarding attributes of the viewer obtained from the viewer of the receiving device;
transmitting service reception control information, from the transmitting device, the service reception control information including the determined service management information and information for specifying the receiving device to receive the service management information; and
receiving the service reception control information transmitted from the transmitting device.
